# EUROPEAN PATENT APPLICATION

(11) **EP 4 084 162 A1**
(43) Date of publication of application: **02.11.2022**
(21) Application number: 21171280.7
(22) Date of filing: 29.04.2021
(51) Int. Cl.: H01M 8/0273, H01M 8/0284, H01M 8/1007, H01M 8/102

(54) **METHOD FOR PRODUCING A MEMBRANE-ELECTRODE ASSEMBLY**

(71) Applicant: TOYOTA JIDOSHA KABUSHIKI KAISHA, Toyota-shi, Aichi-ken 471-8571 (JP)
(72) Inventor: TURON, Genis, TORRANCE, CA, 90503 (US); SUGIMOTO, Toshiki, TOYOTA-SHI, AICHI-KEN (JP)
(74) Representative: Cabinet Beau de Loménie

(57) **Abstract**

The present invention concerns a method for producing a membrane-electrode assembly (MEA) 2, as well as a MEA 2 produced according to this method. This MEA 2 comprises an ion exchange membrane 2a such as a proton-exchange membrane (PEM), a first gas diffusion layer (GDL) 2c on a first side of the ion exchange membrane 2a, and a sealing frame 2d around the first GDL 2c. The method comprises jetting a resin 8 as droplets 9 onto the first side of the ion exchange membrane 2a to cover a gap 7 between the first GDL 2c and the sealing frame 2d and curing the resin 8 covering the gap 7. The membrane-electrode assembly 2 produced according to this method may be used in a fuel cell 1, in particular for a fuel cell electric vehicle (FCEV).

## Description

### TECHNICAL FIELD

The disclosure relates to a method for producing a membrane-electrode assembly (MEA), as well as to an MEA produced using such a method.

### BACKGROUND

Membrane-electrode assemblies are used in the fields of fuel cells and electrolysers and typically comprise two electrodes and an ion exchange membrane between them. This ion exchange membrane may be a proton exchange membrane (PEM), since protons can be considered to be ¹H⁺ cations, but other types of ion exchange membranes, such as alkali anion exchange membranes (AAEM) can alternatively be considered for the same or similar applications.

In a fuel cell, the ion exchange membrane may act as electrolyte to allow a flow of ions between the two sides of the ion exchange membrane which generates a current between the two electrodes. So, for instance, in a proton-exchange membrane fuel cell (PEMFC) the flow of protons through a PEM generates, between the electrodes, a compensating flow of electrons in the same direction. Each electrode can be formed as a gas diffusion layer (GDL) laminated onto a corresponding side of the ion exchange membrane. To prevent reactant leaks between the two sides of the ion exchange membrane which could, at the very least, impair the performance of the fuel cell, the entire perimeter around a central area of the ion exchange membrane covered by the GDL may be clamped and sealed tight, as described for instance in US Patent Application Publication US 2018/219235 A1.

However, to ensure a tight seal around the ion exchange membrane, a narrow lateral gap may be left between the GDL and the sealing frame. This gap represents a weak spot of the MEA where pressure differences between the opposite sides of the ion exchange membrane may cause stress concentrations which could break the ion exchange membrane.

### SUMMARY

A first aspect of the present disclosure is aimed at proposing a method for producing a membrane-electrode assembly comprising a ion exchange membrane, a first gas diffusion layer on a first side of the membrane, and a sealing frame around the first gas diffusion layer, wherein the ion exchange membrane is appropriately reinforced in a gap between the first gas diffusion layer and the sealing frame.

According to this first aspect, the method comprises the steps of jetting a resin as droplets onto the first side of the ion exchange membrane to cover the gap between the first gas diffusion layer and the sealing frame, and curing the resin covering the gap. By jetting the resin as droplets, in particular by using a drop-on-demand (DOD) inkjet process according to a predetermined pattern, it is possible to achieve micrometerscale accurate positioning of the droplets to substantially cover the entire gap and reinforce the ion-exchange membrane there once the resin is cured.

To minimize the time needed for the curing step and thus reduce production costs while preventing bleeding out of the uncured resin, the resin may be a photocurable resin, in particular a UV-curable resin, and the step of curing the resin may be carried out by irradiating the resin with light, in particular UV light.

To ensure the leak-tightness of the sealing frame, while facilitating its application, the sealing frame may comprise an adhesive sheet, for instance a polyethylene naphthalene (PEN) sheet.

The membrane-electrode assembly may also comprise a second gas diffusion layer on a second side of the ion exchange membrane, opposite to the first side, and/or a catalyst layer between the first and/or second gas diffusion layer and the ion exchange membrane. The ion exchange membrane may in particular be a proton exchange membrane (PEM), and more specifically a perfluorosulfonic acid (PFSA) membrane, although other materials and types of ion exchange membranes, such as alkali anion exchange membranes, may alternatively be considered.

A second aspect of the present disclosure relates to a membrane-electrode assembly produced according to the method of the first aspect, a fuel cell including this membrane-electrode assembly, a fuel cell stack comprising a plurality of such fuel cells and/or a fuel cell electric vehicle including this fuel cell stack and an electric motor for propulsion, wherein the fuel cell stack may be connected to the electric motor for supplying electric power to the electric motor.

The above summary of some aspects of the present disclosure is not intended to describe each disclosed embodiment or every implementation of the associated invention. In particular, selected features of any illustrative embodiment within this specification may be incorporated into an additional embodiment unless clearly stated to the contrary.

### BRIEF DESCRIPTION OF THE DRAWINGS

The invention may be more completely understood in consideration of the following detailed description of an embodiment in connection with the accompanying drawings, in which:
- FIG. 1 is an exploded view of a single proton-exchange membrane fuel cell (PEMFC);
- FIG. 2 is a schematic cross-section of a PEMFC according to FIG. 1;
- FIG. 3 is a schematic view of a fuel cell electric vehicle (FCEV) incorporating a stack of PEMFCs according to FIG. 2;
- FIG. 4 is a detail cross-section of an edge of the MEA of the PEMFC of FIG. 1; and
- FIGS. 5A and 5B illustrate two steps of a method of producing the MEA of FIG. 4.

While the invention is amenable to various modifications and alternative forms, specifics thereof have been shown by way of example in the drawings and will be described in detail. It should be understood, however, that the intention is not to limit aspects of the invention to the particular embodiment described. On the contrary, the intention is to cover all modifications, equivalents, and alternatives falling within the scope of the invention.

### DETAILED DESCRIPTION

For the following defined terms, these definitions shall be applied, unless a different definition is given in the claims or elsewhere in this specification.

All numeric values are herein assumed to be preceded by the term "about", whether or not explicitly indicated. The term "about" generally refers to a range of numbers that one of skill in the art would consider equivalent to the recited value (i.e. having the same function or result). In many instances, the term "about" may be indicative as including numbers that are rounded to the nearest significant figure.

Any recitation of numerical ranges by endpoints includes all numbers within that range (e.g., 1 to 5 includes a.o. 1, 4/3, 1.5, 2, *e,* 2.75, 3, n, 3.80, 4, and 5).

Although some suitable dimension ranges and/or values pertaining to various components, features and/or specifications are disclosed, one of skill in the art, incited by the present disclosure, would understand desired dimensions, ranges and/or values may deviate from those expressly disclosed.

As used in this specification and the appended claims, the singular forms "a", "an", and "the" include plural referents unless the content clearly dictates otherwise. As used in this specification and the appended claims, the term "or" is generally employed in its sense including "and/or" unless the content clearly dictates otherwise.

The following detailed description should be read with reference to the drawings in which similar elements in different drawings are numbered the same. The detailed description and the drawings, which are not necessarily to scale, depict illustrative embodiments and are not intended to limit the scope of the invention. The illustrative embodiments depicted are intended only as exemplary. Selected features of any illustrative embodiment may be incorporated into an additional embodiment unless clearly stated to the contrary.

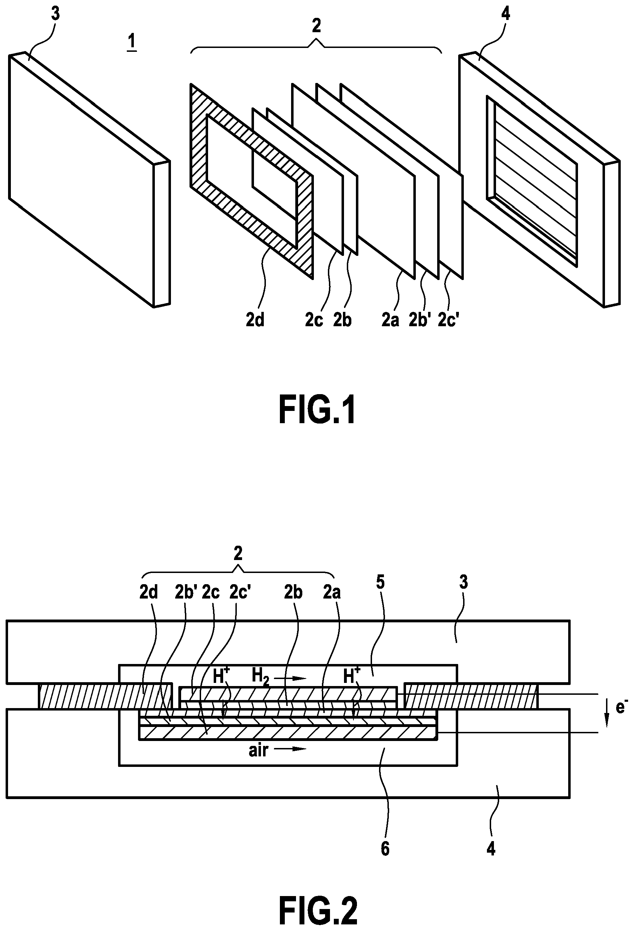

FIGS. 1 and 2 schematically illustrate an embodiment of a ion-exchange membrane fuel cell 1, more specifically a PEMFC, which may comprise a MEA 2 clamped between two separators 3,4. The MEA 2 may comprise an ion exchange membrane 2a, which may be a perfluorosulfonic acid (PFSA) PEM. Within the MEA 2, a first catalyst layer 2b and a first GDL 2c may also be successively stacked onto a first side of the ion exchange membrane 2a, and a second catalyst layer 2b' and a second GDL 2c' may also be successively stacked onto a second side of the ion exchange membrane 2a, opposite to the first side. Each catalyst layer 2b,2b' may comprise particles of a catalyst material, such as platinum, mixed with an electrically-conductive catalyst support, such as carbon powder, and a binder, such as polyvinylidene fluoride (PVDF), whereas each GDL 2c, 2c' may be formed by agglomerated carbon fibers. The ion exchange membrane 2a may have a thickness tₐ of e.g. 5-20 µm whereas each catalyst layer 2b, 2b' and GDL 2c, 2c' may have respective thicknesses t_{b}, t_{c} of 0.1-5 µm and 80-250 µm.

As shown in FIG. 2, during operation, a fuel such as gaseous hydrogen (H₂) may flow through a cavity 5 delimited by one of the separators 3, 4 on one side of the MEA 2, whereas an oxidiser, such as air, may flow through another cavity 6 delimited by the other one of the separators 3, 4 on the opposite side of the MEA 2. Ions, such as protons (¹H⁺), may then flow through the MEA 2, from one cavity to the other, to complete a chemical reaction, such as a redox reaction, generating a compensating flow of electrons (e⁻) between the gas diffusion layers 2c, 2c', acting as electrodes. When the fuel cell is a PEMFC fuelled e.g. with gaseous oxygen and using air as an oxidiser, the resulting reaction product may be water (H₂O).

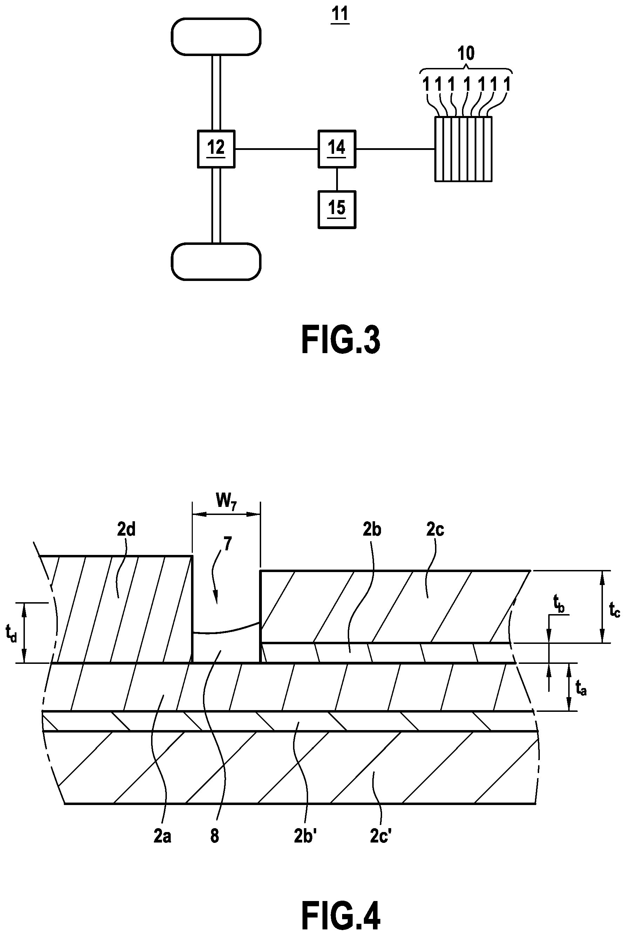

Multiple such fuel cells 1 may be stacked together to form a fuel cell stack 10, as shown in FIG. 3. Within the fuel cell stack 10, the electrodes of the individual fuel cells 1 may be connected in series and/or in parallel to provide the appropriate voltage and/or current for various applications, such as e.g. fuel cell electric vehicles (FCEV). FIG. 3 illustrates such an FCEV 11, wherein the fuel cell stack 10 may be electrically connected, for instance through a power management system 14, to supply electric power to an electric motor 12 for the propulsion of the FCEV 11. A secondary battery 15 may also be connected to the power management system 14 to supplement the fuel cell stack 10.

In order to prevent reactant leaks between the first and second sides of the ion exchange membrane 2a, the MEA 2 may further include a sealing frame 2d, bound onto the first side of the ion exchange membrane 2a and tightly clamped between the separators 3,4 over the entire perimeter of the MEA 2, as shown back in FIG. 2. This sealing frame 2d may be formed as an adhesive sheet, for instance, a polyethylene naphthalene (PEN) sheet with a thickness t_{d} of e.g. 50 to 200 µm.

Since the gas diffusion layer 2c is porous, it may not extend over a perimeter area of the first side of the ion exchange membrane 2a. Instead, the sealing frame 2d may be bound onto this perimeter area of the first side of the ion exchange membrane 2a, possibly using a UV-curable adhesive.

As shown in FIG. 4, there may be a narrow gap 7 between the outer edge of the GDL 2c and the adjacent inner edge of the sealing frame 2d, with a width w₇ of e.g. less than 1 mm. Within this gap 7, the relatively thin ion exchange membrane 2a is not supported by either the GDL 2c or the sealing frame 2d, and may as a consequence be torn open by pressure differences between the cavities 5,6 at opposite sides of the MEA 2. To prevent this, , this gap 7may covered with a layer of resin 8 locally reinforcing the ion exchange membrane 2a, as in the illustrated MEA 2. This resin 8 may be a photocurable resin and in particular a UV-curable resin 8. Before curing, it may have a relatively low viscosity, for example between 1 and 5 MPa·s so that it partially filters into the GDL 2c, tightly binding the layer of resin 8 with the GDL 2c once cured.

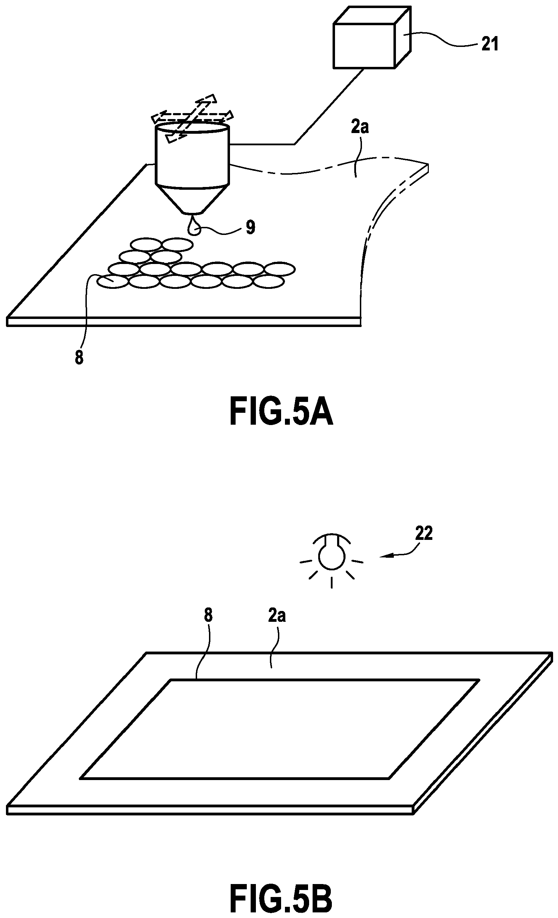

In order to achieve a highly accurate application of the resin 8 onto the surface of the ion exchange membrane 2a, the resin 8 may be jetted as droplets 9, with a volume V of e.g. between 10 and 200 pl and a speed s of e.g. between 1 and 5 m/s, into the gap 7, according to a predetermined pattern, using a drop-on-demand inkjet process, as illustrated in FIG. 5A. In this process, the droplets 9 may be ejected on demand from an inkjet printing head 20 facing the surface of the ion exchange membrane 2a. Both the on-demand droplet ejection and a relative motion of the inkjet printing head 20 relative to the ion exchange membrane 2a at least parallel to the surface of the ion exchange membrane 2a may be controlled by a control unit 21, which may in particular be a digital electronic control unit. In this case, the predetermined droplet pattern may be stored as a digital pattern to be applied by the digital electronic control unit 21 controlling the inkjet printing head 20 during the drop-on-demand inkjet process. The predetermined pattern may not only define the position of the droplets 9 in a given grid, but also the volume V and speed s of each droplet 9, so that these parameters may also be varied according to the predetermined pattern during the drop-on-demand inkjet process.

After the application of the resin 8 illustrated in FIG. 5A, this resin 8 may be cured within a time t of e.g. between 0.5 and 5 s using light, and in particular UV light, which may be irradiated by a lamp 22, as illustrated in FIG. 5B. In this step, the sealing frame 2d may be cured concurrently to the resin 8.

In the resulting MEA 2, the ion exchange membrane 2a is effectively reinforced by the cured resin 8 in the gap 7 between the edges of the GDL 2c and adjacent sealing frame 2d, thus preventing local stress concentrations which could tear open the ion exchange membrane 2a.

Those skilled in the art will recognize that the present invention may be manifested in a variety of forms other than the specific embodiments described and contemplated herein. Accordingly, departure in form and detail may be made without departing from the scope of the present invention as described in the appended claims.

## Claims

1. Method for producing a membrane-electrode assembly (2), wherein the membrane-electrode assembly (2) comprises:
an ion exchange membrane (2a);
a first gas diffusion layer (2c) on a first side of the ion exchange membrane (2);
a sealing frame (2d) around the first gas diffusion layer (2c);
and the method comprises:
jetting a resin (8) as droplets (9) onto the first side of the ion exchange membrane (2a) to cover a gap (7) between the first gas diffusion layer (2c) and the sealing frame (2d); and
curing the resin (8) covering the gap (7).

2. Method according to claim 1, wherein the resin (8) is jetted onto the first side of the ion exchange membrane (2a) using a drop-on-demand inkjet process.

3. Method according to any one of claims 1 or 2, wherein the resin (8) is jetted onto the first side of the ion exchange membrane (2a) according to a predetermined pattern.

4. Method according to any one of claims 1 to 3, wherein the resin (8) is a photocurable resin, and the step of curing the resin (8) is carried out by irradiating the resin (8) with light.

5. Method according to claim 4, wherein the resin (8) is a UV-curable resin, and the step of curing the resin (8) is carried out by irradiating the resin (8) with UV light.

6. Method according to any one of claims 1 to 5, wherein the sealing frame (2d) comprises an adhesive sheet.

7. Method according to claim 6, wherein the adhesive sheet is photocurable.

8. Method according to claim 7, wherein the adhesive sheet is a UV-curable polyethylene naphthalene sheet.

9. Method according to any one of claims 1 to 8, wherein the membrane-electrode assembly (2) also comprises a catalyst layer (2b) between the first gas diffusion layer (2c) and the ion exchange membrane (2a).

10. Method according to any one of claims 1 to 9, wherein the membrane-electrode assembly (2a) also comprises a second gas diffusion layer (2c) on a second side of the ion exchange membrane (2a), opposite to the first side.

11. Method according to any one of claims 1 to 10, wherein the ion exchange membrane (2a) is a proton exchange membrane.

12. Method according to claim 11, wherein the ion exchange membrane (2a) is a perfluorosulfonic acid membrane.

13. Membrane-electrode assembly (2) produced according to the method of any one of claims 1 to 12.

14. Fuel cell (1) comprising the membrane-electrode assembly of claim 13.

15. Fuel cell stack (10) comprising a plurality of fuel cells (1) according to claim 14, stacked together.

16. Fuel cell electric vehicle (11) comprising the fuel cell stack (10) of claim 13 and an electric motor (12) for propulsion, wherein the fuel cell stack (10) is connected to the electric motor (12) for supplying electric power to the electric motor (12).
